# EUROPÄISCHE PATENTSCHRIFT

(11) **EP 1 834 824 B1**
(45) Veröffentlichungstag und Bekanntmachung des Hinweises auf die Patenterteilung: **25.04.2012**
(21) Anmeldenummer: 07005229.5
(22) Anmeldetag: 14.03.2007
(51) Int. Cl.: B60J 10/00

(54) **Extrudierter Dichtungsstrang**
Extruded sealing thread
Bourrelet d'étanchéité extrudé

(30) Priorität: 18.03.2006 DE 102006012520
(43) Veröffentlichungstag der Anmeldung: 19.09.2007
(73) Patentinhaber: SaarGummi technologies S.à.r.l., 5445 Schengen (LU)
(72) Erfinder: Kotz, Stefan, 66663 Merzig (DE)
(74) Vertreter: Bernhardt, Reinhold

(56) Entgegenhaltungen:
- EP-A- 1 016 558
- EP-A- 1 396 331
- EP-A- 1 577 137
- WO-A-2006/021622
- DE-A1- 2 656 701
- DE-A1- 10 002 729
- DE-A1- 19 541 478
- DE-C1- 10 124 484
- JP-A- 4 269 522
- US-B1- 6 739 599

## Beschreibung

Die Erfindung betrifft einen extrudierten Dichtungsstrang, wie er z.B. zum Abdichten von Türen und Klappen an Fahrzeugkarosserien verwendet wird, der aus einem Befestigungsabschnitt, der ein erstes Elastomermaterial aufweist, und einem zusammen mit dem ersten Befestigungsabschnitt extrudierten Dichtungsabschnitt besteht, der ein zweites, gegenüber dem ersten Elastomermaterial weicheres Elastomermaterial aufweist, wobei ein an den Befestigungsabschnitt angrenzender Teil des Dichtungsabschnitts aus dem ersten Elastomermaterial besteht.

Es ist bekannt, die Querschnittsfläche von Dichtungssträngen in Extrusionsrichtung zu variieren, um Längenabschnitte mit geänderten Dichtungseigenschaften zu erzeugen.

Ein Dichtungsstrang der eingangs erwähnten Art ist aus der EP 1 396 331 A1 bekannt. Dieser bekannte Dichtungsstrang weist einen im Querschnitt U-förmigen Befestigungsabschnitt mit einer Verstärkungseinlage aus Kunststoff sowie mit einem lippenförmigen Dichtungsabschnitt und ferner einem schlauchförmigen Dichtungsabschnitt auf. Die Materialzusammensetzung des Befestigungsabschnitts ändert sich in Stranglängsrichtung, in dem die Verstärkungseinlage aus Kunststoff in Stranglängsrichtung unterbrochen ist.

Aus der EP 1 577 137 A1 geht ein Dichtungsstrang mit einem U-förmigen Befestigungsabschnitt und einem schlauchförmigen Dichtungsabschnitt hervor. Ein zusätzlicher, auf dem Befestigungsabschnitt angeordneter, im Material sowohl von dem Befestigungsabschnitt als auch Dichtungsabschnitt verschiedener Strangteil verändert in Stranglängsrichtung seine Position auf dem Befestigungsabschnitt.

Ferner ist aus der EP 1016 558 eine gattungsgemäße Dichtung bekannt.

Der vorliegenden Erfindung liegt die Aufgabe zugrunde, weitere Möglichkeiten zur Erzeugung von Dichtungssträngen mit in Längsrichtung variierenden Dichtungseigenschaften zu erschließen.

Der diese Aufgabe lösende extrudierte Dichtungsstrang nach der Erfindung ist dadurch gekennzeichnet, dass in der Querschnittsfläche des Dichtungsabschnitts der Anteil aus dem ersten Elastomermaterial und ein Anteil aus dem zweiten, den Dichtungsabschnitt im übrigen bildenden Elastomermterial in Extrusionsrichtung varrieren.

Vorteilhaft lassen sich durch Variation der Materialzusammensetzung des Dichtungsabschnitts in Stranglängsrichtung Längenabschnitte mit gewünschten, von den übrigen Teilen der Dichtung abweichenden Dichtungseigenschaften bilden.

Gemäß der Erfindung umfasst der Dichtungsstrang also einen Befestigungsabschnitt und einen Dichtungsabschnitt, wobei in der Querschnittsfläche des Dichtungsabschnitts ein Anteil aus dem Material des Befestigungsabschnitts und ein Anteil aus diesem gegenüber weicherem Material variieren.

Während sich neben den Anteilen des Dichtungsmaterials in Stranglängsrichtung auch der Dichtungsquerschnitt ändern könnte, bleiben in einer bevorzugten Ausführungsform der Erfindung Form und Größe der Querschnittsfläche des Dichtungsstrangs gleich.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein Ausführungsbeispiel für eine Strangdichtung nach der Erfindung und
- Fig. 2 und: 3 weitere Strangdichtungen mit sich in Stranglängsrichtung ändernder Materialzusammensetzung.

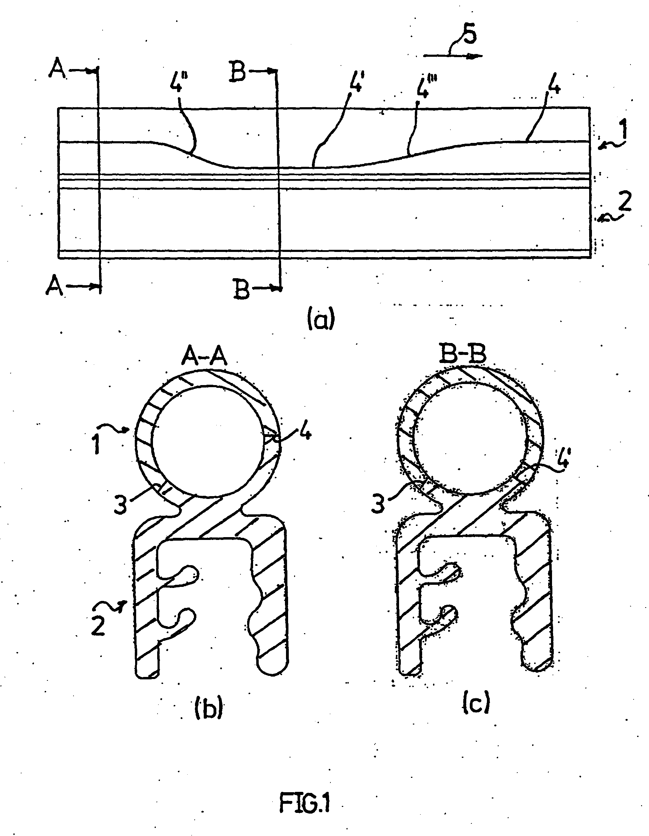

Eine in Fig. 1 gezeigte, in Richtung eines Pfeils 5 extrudierte Strangdichtung weist einen als Schlauch ausgebildeten Dichtungsabschnitt 1 und einen U-förmigen Befestigungsabschnitt 2 auf. Mit dem Befestigungsabschnitt lässt sich der Dichtungsstrang auf einen von einer Fahrzeugkarosserie vorstehenden Flansch aufstecken.

Der Dichtungsabschnitt 1 besteht teilweise aus dem gleichen elastischen Material wie der Befestigungsabschnitt 2. Das Material des Befestigungsabschnitts erstreckt sich jeweils bis zu einer die Schlauchwand durchquerenden Grenzfläche 3 bzw. 4. Jenseits der Grenzflächen 3 und 4 ist der Dichtungsabschnitt 1 durch ein Material gebildet, das weicher als das Material des Befestigungsabschnitts 2 ist.

Wie Fig. 1 a zeigt, weicht ein Abschnitt 4' der Grenzfläche 4 vom Verlauf der übrigen Grenzfläche ab, so dass ein Abschnitt des Dichtungsstrangs gebildet ist, in welchem der Anteil des weicheren Materials an der Querschnittsfläche des Dichtungsabschnitts 1 vergrößert ist. Wie Fig. 1 a ferner zeigt, existieren Übergangsbereiche 4" und 4"', welche sich dadurch ergeben, dass während der Co-Extrusion der aus verschiedenen Materialien bestehenden Teile des Dichtungsstrangs die Werkzeuggeometrie mehr oder weniger schnell geändert wird.

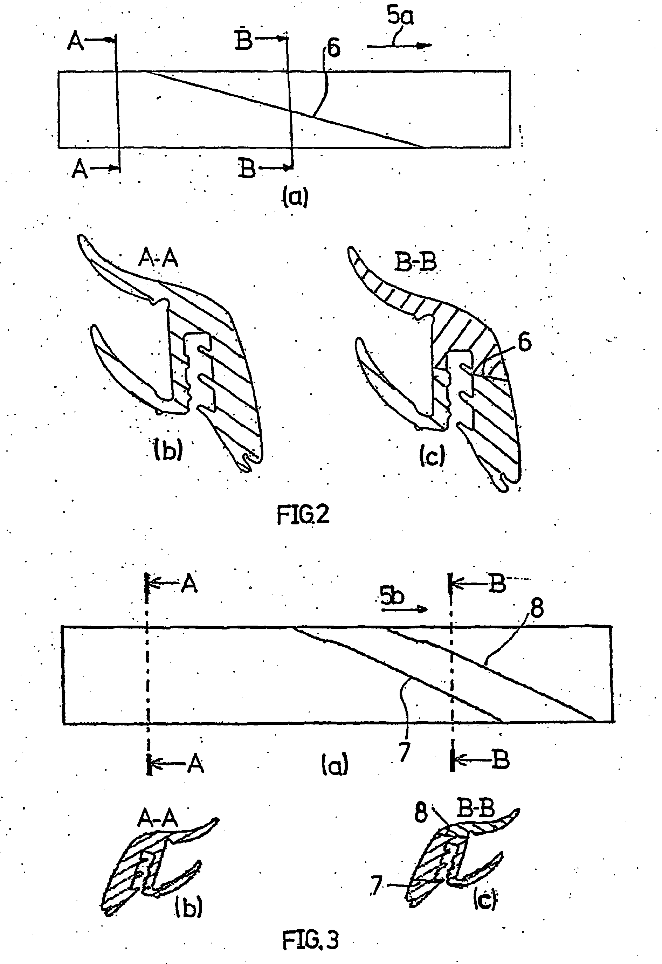

Ein in Fig. 2 gezeigter, in Richtung eines Pfeils 5a extrudierter Dichtungsstrang weist eine sich schräg zur Extrusionsrichtung durch den gesamten Dichtungsstrang hindurch erstreckende Grenzfläche 6 auf, welche unterschiedliche Dichtungsmaterialien voneinander trennt. Die Grenzfläche 6 kommt dadurch zustande, dass im Extrusionswerkzeug eine Sperre verschoben wird, welche die Zufuhr des einen Materials verringert und die Zufuhr des anderen Materials in gleichem Maße verstärkt.

Fig. 3 zeigt einen in Richtung des Pfeils 5b extrudierten Dichtungsstrang mit zwei schräg zur Extrusionsrichtung verlaufenden Grenzflächen 7 und 8. In Extrusionsrichtung geht an der Grenzfläche 7 ein erstes Dichtungsmaterial in ein davon verschiedenes zweites Dichtungsmaterial über. An der Grenzfläche 8 erfolgt wieder ein Übergang von dem zweiten zu dem ersten Dichtungsmaterial. In einem Längenbereich sind somit die Eigenschaften des Dichtungsstrangs durch das zweite Material geändert.

Die Grenzflächen 7 und 8 brauchen nicht, wie in Fig. 3 gezeigt, zueinander parallel zu verlaufen, sondern könnten von einem solchen Verlauf erheblich abweichen. Statt der Grenzfläche 8 könnte z.B. eine zu dieser gespiegelte Grenzfläche vorgesehen sein.

## Patentansprüche

1. Extrudierter Dichtungsstrang, der aus einem Befestigungsabschnitt (2), der ein erstes Elastomermaterial aufweist, und einem zusammen mit dem ersten Befestigungsabschnitt (2) extrudierten Dichtungsabschnitt (1) besteht, der ein zweites, gegenüber dem ersten Elastomermaterial weicheres Elastomermaterial aufweist, wobei ein an den Befestigungsabschnitt (2) angrenzender Teil des Dichtungsabschnitts (1) aus dem ersten Elastomermaterial besteht,
**dadurch gekennzeichnet,**
**dass** in der Querschnittsfläche des Dichtungsabschnitts der Anteil aus dem ersten Elastomermaterial und ein Anteil aus dem zweiten, den Dichtungsabschnitt (1) im Übrigen bildenden Elastomermaterial in Extrusionsrichtung variieren.

2. Extrudierter Dichtungsstrang nach Anspruch 1,
**dadurch gekennzeichnet,**
**dass** der Dichtungsabschnitt (1) schlauchförmig ausgebildet und ein in Extrusionsrichtung variierender, im Querschnitt gesehen an den Befestigungsabschnitt (2) angrenzender Umfangsabschnitt der Schlauchwand aus dem ersten Elastomermaterial besteht.

3. Dichtungsstrang nach Anspruch 2,
**dadurch gekennzeichnet,**
**dass** sich der Umfangsabschnitt der Schlauchwand im Querschnitt gesehen von beiden Seiten einer Verbindungstelle, an der der Dichtungsabschnitt (1) an den Befestigungsabschnitt (2) grenzt, erstreckt.

4. Dichtungsstrang nach einem der Ansprüche 1 bis 3,
**dadurch gekennzeichnet,**
**dass** die Anteile bei gleichbleibender Querschnittsfläche des Dichtungsstrangs variieren.

5. Dichtungsstrang nach einem der Ansprüche 1 bis 4,
**dadurch gekennzeichnet,**
**dass** der Befestigungsabschnitt U-förmig ausgebildet ist.

6. Dichtungsstrang nach Anspruch 5,
**dadurch gekennzeichnet,**
**dass** sich der Dichtungsabschnitt von dem die U-Schenkel verbindenden U-Steg erstreckt.

## Claims

1. Extruded sealing strip comprising a fastening section (2), which comprises a first elastomeric material, and a sealing section (1), which is extruded together with the first fastening section (2) and which comprises a second elastomeric material softer by comparison with the first elastomeric material, wherein a part, which adjoins the fastening section (2), of the sealing section (1) consists of the first elastomeric material, **characterised in that** in the cross-sectional area of the sealing section the proportion of the first elastomeric material and a proportion of the second elastomeric material, which forms the rest of the sealing section (1), vary in the direction of extrusion.

2. Extruded sealing strip according to claim 1, **characterised in that** the sealing section (1) is of hose-shaped construction and a circumferential section, which varies in the extrusion direction and which as seen in cross-section adjoins the fastening section (2), of the hose wall consists of the first elastomeric material.

3. Sealing strip according to claim 2, **characterised in that** the circumferential section of the hose wall as seen in cross-section extends on either side of a connecting point at which the sealing section (1) adjoins the fastening section (2).

4. Sealing strip according to any one of claims 1 to 3, **characterised in that** the proportions vary with constant cross-sectional area of the sealing strip.

5. Sealing strip according to any one of claims 1 to 4, **characterised in that** the fastening section is of U-shaped construction.

6. Sealing strip according to claim 5, **characterized in that** the sealing section extends from the U-web connecting the U-limbs.

## Revendications

1. Bourrelet d'étanchéité extrudé, qui est constitué d'une section de fixation (2) qui présente un premier matériau élastomère et d'une section d'étanchéité (1) extrudée conjointement avec la première section de fixation (2), qui présente un deuxième matériau élastomère, plus mou par rapport au premier matériau élastomère, où une partie de la section d'étanchéité (1) avoisinant la section de fixation (2) est constituée du premier matériau élastomère, **caractérisé en ce que** dans la face en section transversale de la section d'étanchéité, la part en premier matériau élastomère et une part en deuxième matériau élastomère formant par ailleurs la section d'étanchéité (1) varient dans la direction d'extrusion.

2. Bourrelet d'étanchéité extrudé selon la revendication 1, **caractérisé en ce que** la section d'étanchéité (1) est réalisée en une forme tubulaire, et une section périphérique variant dans la direction d'extrusion et, vue en section transversale, avoisinant la section de fixation (2), est constituée du premier matériau élastomère.

3. Bourrelet d'étanchéité selon la revendication 2, **caractérisé en ce que** la section périphérique de la paroi tubulaire, vue en section transversale, s'étend depuis les deux côtés d'un emplacement de liaison auquel la section d'étanchéité (1) avoisine la section de fixation (2).

4. Bourrelet d'étanchéité selon l'une des revendications 1 à 3, **caractérisé en ce que** les parts, pour une face en section transversale qui reste identique du bourrelet d'étanchéité, varient.

5. Bourrelet d'étanchéité selon l'une des revendications 1 à 4, **caractérisé en ce que** la section de fixation est réalisée en forme de U.

6. Bourrelet d'étanchéité selon la revendication 5, **caractérisé en ce que** la section d'étanchéité s'étend depuis le dos du U reliant les branches en U.
